# EUROPÄISCHE PATENTSCHRIFT

(11) **EP 1 878 341 B1**
(45) Veröffentlichungstag und Bekanntmachung des Hinweises auf die Patenterteilung: **21.07.2010**
(21) Anmeldenummer: 07010315.5
(22) Anmeldetag: 24.05.2007
(51) Int. Cl.: A01K 27/00, B65H 75/44

(54) **Leineneinrichtung für eine mechanisch auf- und abrollbare Leine zum Führen von Tieren**
Leash device for a mechanically rollable and unrollable leash for walking animals
Dispositif à laisse pour une laisse enroulable et déroulable mécaniquement destinée à guider des animaux

(30) Priorität: 14.07.2006 DE 202006010918 U
(43) Veröffentlichungstag der Anmeldung: 16.01.2008
(73) Patentinhaber: Flexi-Bogdahn Technik GmbH & Co. KG, 22941 Bargteheide (DE)
(72) Erfinder: Bleshoy, Ernst-Peter, 22455 Hamburg (DE)
(74) Vertreter: Jaeschke, Rainer

(56) Entgegenhaltungen:
- EP-A- 0 941 657
- WO-A-2004/105468
- US-B1- 6 526 918

## Beschreibung

Die Erfindung betrifft eine Leineneinrichtung für eine auf- und abrollbare Leine zum Führen von Tieren, mit einem Gehäuse und einer in dem Gehäuse drehbar gelagerten Rolle, von der die Leine entgegen der Kraft einer Feder abwickelbar und auf die die Leine aufgrund der Federkraft aufwickelbar ist. Insbesondere betrifft die Erfindung eine Rollleine für Hunde, so dass im Folgenden überwiegend von einer Leineneinrichtung für Hunde die Rede ist, ohne dass damit eine Beschränkung verbunden sein soll.

Derartige Hundeleinen sind beispielsweise aus der EP 0 941 657 B1 und der US-A-526 918 bekannt. Das die Leine und die Rolle aufnehmende Gehäuse weist einen Handgriff auf, mit dem die Leineneinrichtung getragen werden kann. Es ist eine Bremseinrichtung vorhanden, um die Leine in gewünschter Länge zu arretieren. Die Bremseinrichtung ist zudem mit einer Verriegelungseinrichtung versehen, um die Bremseinrichtung im arretierenden Zustand zu halten. Die Leine verbleibt dann im ausgezogenen Zustand in der gewünschten Länge.

Durch eine derartige Hundeleine ist es möglich, dass sich der Hund weitestgehend frei bewegen kann. Durch Betätigen der Bremseinrichtung kann der Auslauf beschränkt und der Hund zurückgezogen werden. Insbesondere im freien Gelände wird sich die Leine häufig im voll abgewickelten Zustand befinden. Es ist jedoch wünschenswert, den maximalen Auslauf des Hundes, beispielsweise beim Führen des Hundes in der Stadt oder in Gebäuden, von vornherein auf eine bestimmte maximale Länge zu begrenzen. Bei der bekannten Hundeleine ist es hierfür erforderlich, dass der Hundeführer die Leine auf der gewünschten Länge arretiert. Unterschreitet der Hund diese Länge, hängt die Leine durch.

Der Erfindung liegt die Aufgabe zugrunde, eine Leineneinrichtung der Eingangs geschilderten Art so auszubilden, dass die maximale Auszugslänge der Leine beschränkbar ist. Dabei soll die Leine bis zum Erreichen dieser Länge weiterhin ab- und wieder aufwickelbar sein.

Die Aufgabe wird gemäß der Erfindung dadurch gelöst, dass die Rolle mit einem Getriebe zusammenwirkt, das eine Steuerscheibe antreibt, die eine Sperrklinke freigibt, die bei Erreichen einer vorbestimmten abgewickelten Länge der Leine in Eingriff mit der Rolle bringbar ist und die Drehung der Rolle in Abwickelrichtung anhält. Durch ein solches Getriebe wird erreicht, dass die Leine bei freigegebener Sperrklinke wie eine kürzere Leine funktioniert. Ist die Sperrklinke nicht freigegeben und kommt somit nicht in Eingriff mit der Rolle, funktioniert die Leine wie eine herkömmliche Leine ohne eine derartige Längenbeschränkung.

Es ist zweckmäßig, wenn die Sperrklinke in einer Lage, in der Sperrklinke nicht in Eingriff mit der Rolle bringbar ist, durch einen Bedienhebel arretierbar ist. Hierdurch wird bewirkt, dass der Benutzer die maximale Länge der Leine voreinstellen kann. Bringt er den Bedienhebel in eine Stellung, in der Sperrklinke arretiert ist, kann die gesamte Leine von der Rolle abgewickelt werden. Wird der Bedienhebel in eine Stellung gebracht, in der die Sperrklinke freigegeben ist, gelangt sie bei Erreichen der vorbestimmten Länge in Eingriff mit der Rolle, so dass nur die geringere Leinenlänge zur Verfügung steht.

Besonders zweckmäßig ist es, wenn die Sperrklinke nur in Abwickelrichtung in Eingriff mit der Rolle bringbar ist. Dies hat den Vorteil, dass die Wahl der maximalen Länge der Leine zu jeder Zeit, also auch bei maximal ausgezogener Länge der Leine, erfolgen kann. Wird die Leine im Laufe des Gebrauches nunmehr bis zum Erreichen der vorbestimmten reduzierten Länge der Leine aufgewickelt, gelangt die Sperrklinke bei einem erneuten Abwickelvorgang in Eingriff mit der Rolle, so dass die maximale Länge der Leine beschränkt wird. Die Bedienung wird insgesamt erleichtert.

Insbesondere bei größeren oder lebhaften Hunden wirken auf die Sperrklinke bei Erreichen der eingestellten Länge relativ große Kräfte. Es ist daher gemäß der Erfindung vorgesehen, dass die Sperrklinke verschwenkbar am Gehäuse gelagert ist und sich beim Eingriff mit der Rolle am Gehäuse entgegen der Drehbewegung der Rolle abstützt. Hierdurch wird die auf die Rolle wirkende Zugkraft sicher in das Gehäuse eingeleitet. Das Getriebe selbst braucht keine Kräfte zu übertragen, so dass dessen Dimensionierungen nicht an die zu übertragende Kraft angepasst zu werden braucht.

Wie die Sperrklinke mit dem Getriebe zusammenwirkt, ist grundsätzlich beliebig. Es kann vorgesehen werden, dass die Sperrklinke mit einem Freigabehebel verbunden ist, der mit der Steuerscheibe zusammenwirkt. Hierdurch kann die Konstruktion vereinfacht werden. Der Freigabehebel wird durch das Getriebe in eine Lage gebracht, in der die Sperrklinke in Eingriff mit der Rolle bringbar ist. Das Getriebe braucht lediglich den Freigabehebel zu bewegen.

Es kann vorgesehen werden, dass der Freigabehebel die Sperrklinke entgegen der Kraft einer Feder außer Eingriff mit der Rolle hält. Sobald der Freigabehebel durch die Steuerscheibe freigegeben wird, wird durch die Feder bewirkt, dass die Sperrklinke in Eingriff mit der Rolle kommt. Eine sichere Funktion der Leineneinrichtung wird hierdurch bewirkt.

Das Getriebe ist vorzugsweise ein Zahnradgetriebe, das die gewünschte Übersetzung aufweist. Es ist vorgesehen, dass das Getriebe ein Ritzel, das auf der Achse der Rolle angeordnet ist und wenigstens ein Zwischenzahnrad umfasst, das mit dem Ritzel kämmt und die Steuerscheibe antreibt. In vorteilhafter Weise ist die Steuerscheibe als ein innenverzahntes Zahnrad ausgebildet, das konzentrisch zu der Achse der Rolle verläuft und in Eingriff mit wenigstens einem Zwischenzahnrad ist. Durch diese Ausbildung kann das Getriebe platzsparend ausgebildet werden. Insbesondere kann die gewünschte Übersetzung bereitgestellt werden. So kann erreicht werden, dass durch die Auswahl der Zähnezahl des Ritzels, des Zwischenzahnrades und des innenverzahnten Zahnrades sich die Steuerscheibe wesentlich langsamer dreht als die Rolle, so dass die Freigabe der Sperrklinke nur einmalig im Zuge der gesamten Abrollbewegung der Rolle erfolgt. Dies hat den Vorteil, dass nur eine einzige reduzierte Länge einstellbar ist. Fehlbedienungen werden somit zuverlässig vermieden.

Derartige Leineneinrichtungen unterliegen rauen Betriebsbedingungen. Es ist daher vorgesehen, dass das Getriebe innerhalb des Gehäuses gekapselt ist. Schmutz oder Abrieb können dann nicht in das Getriebe gelangen, wodurch ansonsten dessen Betrieb beeinträchtigt würde.

Wie die Steuerscheibe mit der Sperrklinke oder dem Freigabehebel zusammenwirkt, ist ebenfalls beliebig. Es ist gemäß der Erfindung vorgesehen, dass die Steuerscheibe auf der ihrer Drehachse abgekehrten Umfangsfläche einen Steuernocken oder eine Steuervertiefung aufweist, der bzw. die mit dem Freigabehebel zusammenwirkt. Zusammen mit der Maßnahme, dass die Steuerscheibe sich wesentlich langsamer dreht als die Rolle, reicht ein derartiger Steuernocken oder eine derartige Steuervertiefung aus, um eine einmalige Freigabe der Sperrklinke nach einer vorbestimmten Anzahl von Drehungen der Rolle zu bewirken. Sobald der Freigabehebel mit dem Steuernocken oder der Steuervertiefung zusammenwirkt, kann die Sperrklinke in Eingriff mit der Rolle gelangen.

Es ist zweckmäßig, wenn die Rolle seitliche Flansche aufweist, zwischen denen die Leine verläuft, und dass auf wenigstens einem Flansch wenigstens ein Arretiervorsprung oder eine Arretiervertiefung vorgesehen ist, in die die Sperrklinke in der freigegebenen Lage eingreift. Kommt nun der Freigabehebel in den Bereich des Steuernockens oder der Steuervertiefung der Steuerscheibe und die Sperrklinke ist im Bereich des Arretiervorsprungs oder der Arretiervertiefung der Rolle, kann ein Anhalten der Rolle in Abwickeldrehrichtung erfolgen. Ist die Sperrklinke nicht freigegeben, wird der Freigabehebel die Steuervertiefung oder den Steuernocken ohne Auswirkung auf die Sperrklinke überstreichen. Die Leine kann bis zur ihrer maximalen Länge abgewickelt werden.

Ist die Sperrklinke jedoch freigegeben, wird der Freigabehebel mit dem Steuernocken oder der Steuervertiefung zusammenwirken, wodurch die Sperrklinke, beispielsweise aufgrund der Kraft einer Feder, in Eingriff mit dem Arretiervorsprung oder der Arretiervertiefung der Rolle gelangt. Ein Anhalten der Rolle in Abwickelrichtung wird bewirkt.

Da die Sperrklinke nur in Abwickelrichtung der Rolle ein Anhalten derselben bewirkt, kann ein Aufwickeln der Leine unabhängig von der Freigabe der Sperrklinke erfolgen. Demnach ist das Aufwickeln der Leine stets gewährleistet. Es können an der Leineneinrichtung die üblichen und bekannten Bremsmittel zum Anhalten der Wickelbewegung der Leine vorhanden sein, mit denen die Leine in jeder beliebigen Länge arretiert werden kann.

Die Erfindung wird im Folgenden anhand der schematischen Zeichnung näher erläutert. Es zeigen:
- Fig.1: die Leineneinrichtung gemäß der Erfindung bei arretierter Sperrklinke,
- Fig.2: die Leineneinrichtung gemäß Fig.1, jedoch mit freigegebener Sperrklinke, und

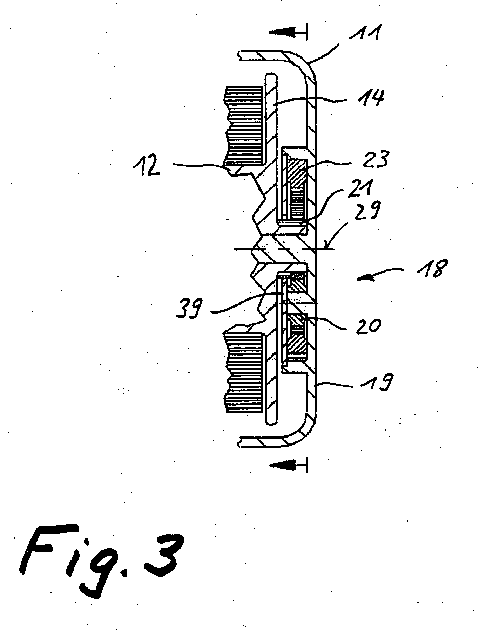

- Fig.3: ein Schnitt entlang der Linie III-III in Fig.1.

Die in der Zeichnung dargestellte Leineneinrichtung weist ein Gehäuse 11 auf, in dem eine Rolle 12 drehbar gelagert ist. Auf der Rolle 12 ist eine Leine 13 vorhanden, die entgegen der Kraft einer nicht gezeigten Spiralfeder von der Rolle abwickelbar und aufgrund der Federkraft aufwickelbar ist.

Die Rolle 12 weist einen seitlichen Flansch 14 auf, der mit einem in der Zeichnung nicht gezeigten gegenüberliegenden Flansch einen Freiraum begrenzt, in dem die Leine 13 auf der Rolle seitlich geführt ist. Der Flansch 14 ist mit einem Arretiervorsprung 15 versehen, der mit einer Sperrklinke 16 zusammenwirkt. Die Sperrklinke 16 dient zum Anhalten der Abwickelbewegung in Richtung des Pfeiles 17, um die Länge der abgewickelten Leine zu begrenzen.

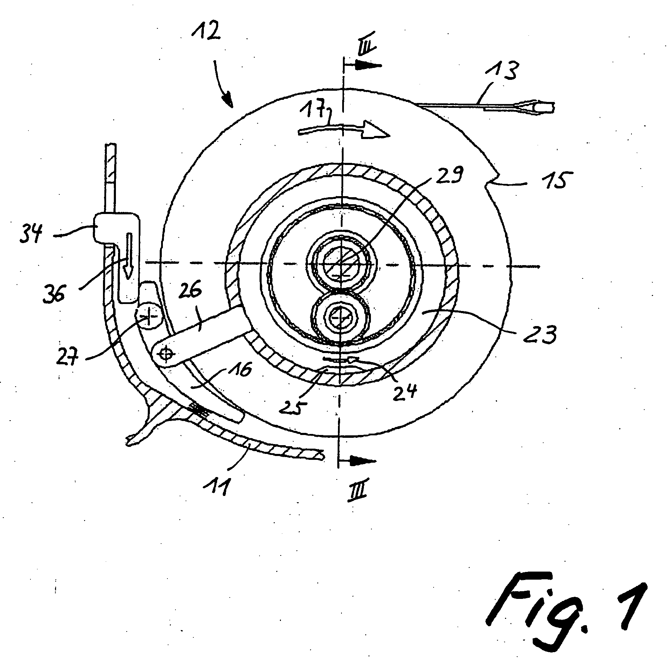

Die Sperrklinke 16 wird über ein im Folgenden beschriebenes Getriebe 18 in Eingriff mit dem Arretiervorsprung 15 gebracht. Das Getriebe 18 ist zwischen dem einen Flansch 14 und der Wandung 19 des Gehäuses 11 der Leineneinrichtung angeordnet. Es umfasst ein Zwischenzahnrad 20, das auf einem Wellenstummel am Gehäuse drehbar gelagert ist und mit einem auf der Drehachse 21 der Rolle 12 angeordneten Ritzel 21 kämmt. Das Zwischenzahnrad 20 ist in Eingriff mit der Innenverzahnung 22 einer Steuerscheibe 23, die sich demnach in Richtung des Pfeiles 24 in Fig. 1 entgegengesetzt zur Drehrichtung der Rolle dreht. Im Einzelnen ist die Wahl der Übersetzung so getroffen, dass sich die Steuerscheibe 23 entgegengesetzt der Rolle 12 langsamer dreht als die Rolle. So kann beispielsweise vorgesehen werden, dass sich die Rolle 12 sechs- bis zehnmal dreht, während die Steuerscheibe 23 nur eine Umdrehung durchläuft.

Die Steuerscheibe 23 weist eine Vertiefung 25 auf, in die ein Steuerhebel 26 eingreifen kann. Hier ist die Anordnung so getroffen, dass der Steuerhebel 26 gelenkig mit der Sperrklinke 16 verbunden ist, die ihrerseits gelenkig an einem Drehzapfen 27 im Gehäuse gelagert ist. Es ist eine Druckfeder 28 vorgesehen, die die Sperrklinke in Richtung auf die Drehachse 29 der Rolle 12 drückt. Durch diese Anordnung wird erreicht, dass die Sperrklinke 16 stets das Bestreben hat, sich in Richtung auf die Drehachse 29 zu bewegen. Diese Bewegung wird durch den Steuerhebel 26 verhindert, der in einer radialen Durchbrechung 30 einer die Steuerscheibe 23 konzentrisch umgebenden Lagerschale 31 hin- und herverschiebbar gelagert ist.

Die Sperrklinke 16 wird demnach durch den Steuerhebel 26 in einer Lage gehalten, in der sie nicht in Eingriff mit dem Arretiervorsprung 15 der Rolle 12 bringbar ist. Die Steuerscheibe 23 verhindert ein Eintauchen des Steuerhebels 26 in die Lagerschale in Richtung der Drehachse 29, solange sich die auf der Umfangsfläche der Steuerscheibe aufliegende Stirnseite des Steuerhebels 26 nicht im Bereich der Vertiefung 25 befindet.

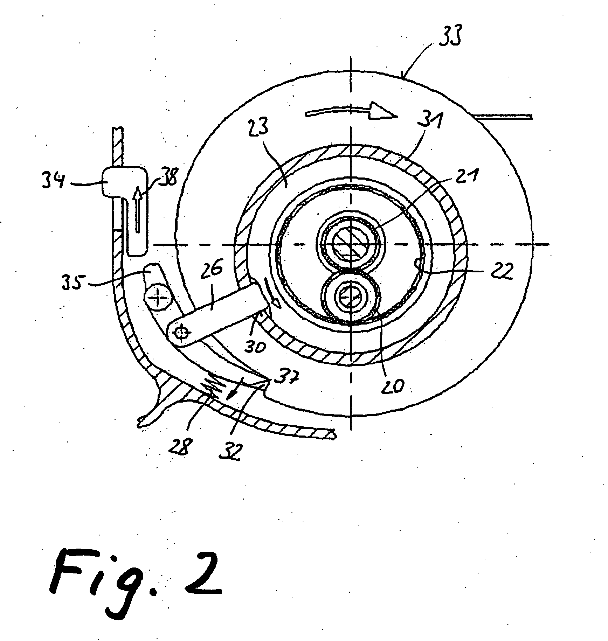

Gelangt nun die Vertiefung 25 der Steuerscheibe 23 in den Bereich der Durchbrechung 30, kann der Steuerhebel 26 sich in Richtung auf die Drehachse 29 bewegen, und die Sperrklinke 16 verschwenkt sich aufgrund der Kraft der Feder 28 ebenfalls in Richtung auf die Drehachse 29. Sofern nun in dieser Drehlage der Steuerscheibe 23 sich die vordere Kante 32 der Sperrklinke 16 im Bereich des Arretiervorsprunges 15 befindet, kann die Sperrklinke in Eingriff mit der Rolle gelangen, wodurch die Drehbewegung der Rolle in Richtung des Pfeiles 17 angehalten wird. Diese Lage der Sperrklinke 16 ist in Fig. 2 dargestellt.

In der in Fig. 2 gezeigten Stellung der Steuerscheibe 23 relativ zur Rolle 12 kann die Sperrklinke in Eingriff mit dem Arretiervorsprung 15 gelangen, wodurch die Leine in einer vorbestimmten, kürzeren Länge angehalten wird. Ein weiteres Abwickeln ist nicht mehr möglich. Ein Aufwickeln aufgrund der Federkraft entgegen der Drehrichtung des Pfeiles 17 ist jedoch nach wie vor möglich, da die Sperrklinke 16 eine Drehbewegung in diese Richtung nicht behindert.

Im Einzelnen ist die Anordnung so getroffen, dass die Umfangsfläche 33 des Flansches 14 einen sich erweiternden Radius aufweist, so dass ein Abgleiten der Sperrklinke 16 auf dem Umfang in Aufwickelrichtung der Rolle 12 möglich ist. Die Sperrklinke 16 wird demnach durch die Umfangsfläche 33 des Flansches 14 wieder von der Drehachse 29 wegbewegt in eine Stellung, die der Lage in Fig. 1 entspricht. Gleichzeitig wird sich die Steuerscheibe 23 verdrehen, so dass der Steuerhebel 26 aus der Vertiefung 29 gelangt. Dann stützt sich die Sperrklinke 16 über den Steuerhebel 26 an der Umfangsfläche der Steuerscheibe 23 ab und kann nicht mehr in Eingriff mit dem Arretiervorsprung 15 der Rolle 12 kommen. Demnach wird die Leine 13 auch bei freigegebener Sperrklinke in gleicher Weise auf- und abgewickelt, wie ohne Sperrklinke. Die Bedienung ändert sich demnach nicht. Lediglich die maximale Auszugslänge wird durch die Sperrklinke beschränkt.

Es ist auf der Zeichnung ersichtlich, dass eine Arretierung der Rolle 12 in Abwickelrichtung 17 nur dann erfolgt, wenn sowohl der Steuerhebel 26 in die Vertiefung 25 der Steuerscheibe 23 eintaucht als auch die Vorderkante 32 der Sperrklinke 16 sich im Bereich des Arretiervorsprunges 15 befindet. Diese Lagen der zusammenwirkenden Bauteile werden im Zuge des Abwickelvorganges nur einmal erreicht, so dass durch diese Maßnahme eine Arretierung der Leine 13 in nur einer vorbestimmten Länge möglich ist.

Ohne weitere Maßnahmen würde die Sperrklinke stets bei Erreichen der reduzierten Länge einrasten und ein weiteres Abwickeln der Leine 13 verhindern. Um ein Abwickeln der gesamten Leine 13 zu ermöglichen, ist ein Bedienhebel 34 vorgesehen, der von außen bedienbar am Gehäuse 11 angeordnet ist. Die Sperrklinke 16 ist durch den Bedienhebel in einer Lage arretierbar, in der sie nicht in Eingriff mit der Rolle 12 gelangen kann.

Im Einzelnen wird dies dadurch erreicht, dass die Sperrklinke einen Hebelfortsatz 35 aufweist, der der vorderen Kante 32 gegenüberliegt und der mit dem Bedienhebel 34 zusammenwirkt derart, dass beim Verschieben des Bedienhebels 34 in Richtung des Pfeiles 36 die Sperrklinke 16 in Richtung des Pfeiles 37 verschwenkt wird und in der ausgefahrenen Lage durch den Bedienhebel 34 gehalten wird. In dieser Lage kann sich die Sperrklinke 16 auch bei Freigabe durch den Steuerhebel 26 nicht mehr in Richtung auf die Drehachse 29 verschwenken, so dass die Sperrklinke stets außer Eingriff mit der Rolle bleibt, auch wenn die Vertiefung 25 sich im Bereich der Durchbrechung 30 befindet und die vordere Kante 32 mit dem Arretiervorsprung 15 zusammenwirken könnte. In dieser in Fig. 1 gezeigten Stellung des Bedienhebels 34 ist die Leine demnach voll abwickelbar. Erst wenn der Bedienhebel in Richtung des Pfeiles 38 in Fig. 2 verschoben wird, ist die Sperrklinke freigegeben und kann die Drehbewegungen der Rolle in Abwickelrichtung 17 bei Erreichen der vorbestimmten reduzierten Länge der Leine 13 anhalten.

Die Zugkraft der Leine wird durch die Sperrklinke 16 und den Zapfen 27 auf das Gehäuse 11 übertragen. Das Getriebe 18 dient nur zum Freigeben der Sperrklinke 16 durch den Steuerhebel 26. Es braucht keine großen Kräfte zu übertragen und kann entsprechend klein dimensioniert sein. Das Getriebe findet daher Platz zwischen dem Flansch 14 und der Wandung 19 des Gehäuses, und die Zahnräder können entsprechend dünn gestaltet sein. Es ist daher vorgesehen, dass die die Steuerscheibe aufnehmende Lagerschale 31 zudem die äußere Wandung des Getriebes 18 bildet. Von der dem Flansch 14 zugekehrten Seite kann das Getriebe 18 dann durch eine Abdeckplatte 39 verschlossen sein. Schmutz und dergleichen können somit nicht in das Getriebe gelangen, wodurch ein einwandfreier Betrieb gewährleistet wird.

Die Bedienung der Leineneinrichtung ist durch diese zusätzliche Funktion der Beschränkung der Leinenlänge nicht kompliziert. Die Wahl der Abwickellänge kann in jedem Zustand der Leine erfolgen. Befindet sich beispielsweise die Leine im voll abgewickelten Zustand, kann der Bedienhebel 34 in die in Fig. 2 gezeigte Lage gebracht werden. Ein Aufwickeln der Leine ist trotz freigegebener Sperrklinke möglich, da die Sperrklinke 16 nicht in Eingriff mit dem Arretiervorsprung 15 kommen kann. Die Sperrklinke würde durch den sich erweiternden Verlauf der Umfangsfläche des Flansches 14 angehoben und im Bereich des Arretiervorsprungs ohne Auswirkungen nach unten Fallen, sofern sie nicht ohnehin durch den Steuerhebel 26 in der ausgerückten Stellung gemäß Fig. 1 gehalten wird.

Wird nun die voreingestellte reduzierte Länge unterschritten, wird ein erneutes Abwickeln über diese Länge hinaus durch die Sperrklinke 16 verhindert, weil dann die Steuerscheibe einerseits und der Arretiervorsprung 15 andererseits eine Lage einnehmen, die ein Einschwenken der Sperrklinke in den Arretiervorsprung 15 ermöglichen. Ein weiteres Ausziehen über die voreingestellte reduzierte Länge der Leine hinaus ist nicht mehr möglich. Gleichwohl funktioniert die Leine auch bei reduzierter maximaler Auszugslänge der Leine wie eine herkömmliche automatische Rollleine.

Die Freigabe der Rolle zum vollständigen Abwickeln der Leine 13 kann jederzeit durch Verschieben des Bedienhebels 34 in Richtung des Pfeiles 36 erfolgen, wodurch die Sperrklinke in die ausgerückte Position gemäß Fig. 1 verschwenkt wird.

Das Getriebe kann sehr dünn ausgebildet werden, so dass sich die gesamte Breite der Leineneinrichtung sich nicht vergrößert. Trotz der zusätzlichen Funktion bleibt das Gehäuse handlich und kann optisch ansehend gestaltet werden.

## Patentansprüche

1. Leineneinrichtung für eine auf- und abrollbare Leine zum Führen von Tieren, mit einem Gehäuse (11) und einer in dem Gehäuse drehbar gelagerten Rolle (12), von der die Leine (13) entgegen der Kraft einer Feder abwickelbar und auf die die Leine aufgrund der Federkraft aufwickelbar ist, **dadurch gekennzeichnet, dass** die Rolle (12) mit einem Getriebe (18) zusammenwirkt, das eine Steuerscheibe (23) antreibt, die eine Sperrklinke (16) freigibt, die bei Erreichen einer vorbestimmten abgewickelten Länge der Leine in Eingriff mit der Rolle (12) bringbar ist und die Drehung der Rolle (12) in Abwickelrichtung (17) anhält.

2. Leineneinrichtung nach Anspruch 1, **dadurch gekennzeichnet, dass** die Sperrklinke (16) in einer Lage, in der die Sperrklinke nicht in Eingriff mit der Rolle (12) bringbar ist, durch einen Bedienhebel (34) arretierbar ist.

3. Leineneinrichtung nach Anspruch 1 oder 2, **dadurch gekennzeichnet, dass** die Sperrklinke (16) nur in Abwickelrichtung (17) in Eingriff mit der Rolle (12) bringbar ist.

4. Leineneinrichtung nach einem der Ansprüche 1 bis 3, **dadurch gekennzeichnet, dass** die Sperrklinke (16) verschwenkbar am Gehäuse (11) gelagert ist und sich beim Eingriff mit der Rolle (12) am Gehäuse entgegen der Drehbewegung der Rolle abstützt.

5. Leineneinrichtung nach einem der Ansprüche 1 bis 4, **dadurch gekennzeichnet, dass** die Sperrklinke mit einem Steuerhebel (26) verbunden ist, der mit der Steuerscheibe (23) zusammenwirkt.

6. Leineneinrichtung nach einem der Ansprüche 1 bis 5, **dadurch gekennzeichnet, dass** der Steuerhebel (26) die Sperrklinke (16) entgegen der Kraft einer Feder (28) außer Eingriff mit der Rolle (12) hält.

7. Leineneinrichtung nach einem der Ansprüche 1 bis 6, **dadurch gekennzeichnet, dass** das Getriebe (18) ein Ritzel (21), das auf der Achse (29) der Rolle (12) angeordnet ist, und wenigstens ein Zwischenzahnrad (20) umfasst, das mit dem Ritzel kämmt und die Steuerscheibe (23) antreibt.

8. Leineneinrichtung nach einem der Ansprüche 1 bis 7, **dadurch gekennzeichnet, dass** die Steuerscheibe (23) als ein innenverzahntes Zahnrad ausgebildet ist, das konzentrisch zu der Achse (29) der Rolle verläuft und in Eingriff mit wenigstens einem Zwischenzahnrad (20) ist.

9. Leineneinrichtung nach einem der Ansprüche 1 bis 8, **dadurch gekennzeichnet, dass** das Getriebe (18) innerhalb des Gehäuses (11) gekapselt ist.

10. Leineneinrichtung nach einem der Ansprüche 1 bis 9, **dadurch gekennzeichnet, dass** Übersetzung des Getriebes (18) so gewählt ist, dass die Sperrklinke (16) in nur einer Drehlage der Steuerscheibe (23) in Einriff mit der Rolle (12) bringbar ist.

11. Leineneinrichtung nach einem der Ansprüche 1 bis 10, **dadurch gekennzeichnet, dass** die Steuerscheibe (23) auf der ihrer Drehachse (29) abgekehrten Umfangsfläche einen Steuernocken oder eine Steuervertiefung (25) aufweist, der bzw. die mit dem Steuerhebel (26) zusammenwirkt.

12. Leineneinrichtung nach einem der Ansprüche 1 bis 11, **dadurch gekennzeichnet, dass** die Rolle seitliche Flansche (14) aufweist, zwischen denen die Leine verläuft, und dass auf wenigstens einem Flansch wenigstens ein Arretiervorsprung (15) oder eine Arretiervertiefung vorgesehen ist, in den beziehungsweise die die Sperrklinke (16) in der freigegebenen Lage eingreift.

## Claims

1. Leash device for a windable and unwindable leash for guiding animals, comprising a housing (11) and a reel (12) which is rotatably mounted in the housing and from which the leash (13) can be unwound counter to the force of a spring and onto which the leash can be wound by virtue of the spring force, **characterised in that** the reel (12) cooperates with a gear mechanism (18) which drives a control disc (23) that releases a pawl (16) which, when a predefined unwound length of the leash is reached, can be brought into engagement with the reel (12) and stops the rotation of the reel (12) in the unwinding direction (17).

2. Leash device according to claim 1, **characterised in that** the pawl (16) can be locked by an actuating lever (34) in a position in which the pawl cannot be brought into engagement with the reel (12).

3. Leash device according to claim 1 or 2, **characterised in that** the pawl (16) can be brought into engagement with the reel (12) only in the unwinding direction (17).

4. Leash device according to one of claims 1 to 3, **characterised in that** the pawl (16) is pivotably mounted on the housing (11) and, when in engagement with the reel (12), is supported on the housing counter to the rotational movement of the reel.

5. Leash device according to one of claims 1 to 4, **characterised in that** the pawl is connected to a control lever (26) which cooperates with the control disc (23).

6. Leash device according to one of claims 1 to 5, **characterised in that** the control lever (26) keeps the pawl (16) out of engagement with the reel (12) counter to the force of a spring (28).

7. Leash device according to one of claims 1 to 6, **characterised in that** the gear mechanism (18) comprises a pinion (21) which is arranged on the axis (29) of the reel (12), and at least one intermediate gearwheel (20) which meshes with the pinion and drives the control disc (23).

8. Leash device according to one of claims 1 to 7, **characterised in that** the control disc (23) is designed as an internally toothed gearwheel which runs concentric to the axis (29) of the reel and is in engagement with at least one intermediate gearwheel (20).

9. Leash device according to one of claims 1 to 8, **characterised in that** the gear mechanism (18) is encapsulated within the housing (11).

10. Leash device according to one of claims 1 to 9, **characterised in that** the transmission ratio of the gear mechanism (18) is selected in such a way that the pawl (16) can be brought into engagement with the reel (12) in just one rotary position of the control disc (23).

11. Leash device according to one of claims 1 to 10, **characterised in that** the control disc (23) has on the circumferential surface facing away from its axis of rotation (29) a control cam or a control depression (25) which cooperates with the control lever (26).

12. Leash device according to one of claims 1 to 11, **characterised in that** the reel has side flanges (14), between which the leash runs, and **in that** provided on at least one flange is at least one locking protrusion (15) or one locking depression, in which the pawl (16) engages in the released position.

## Revendications

1. Installation de laisse pour une laisse enroulable et déroulable servant à tenir des animaux, comprenant :
- un boîtier (11) et une bobine (12) montée à rotation dans le boîtier, la laisse (13) se dévidant contre la force d'un ressort et s'enroulant avec la force du ressort,
**caractérisée en ce que**
la bobine (12) coopère avec une transmission (18) entraînant un disque de commande (23) libérant un verrou (16) qui, lorsque la laisse atteint une longueur de dévidage prédéterminée, vient en prise avec la bobine (12) et bloque la rotation de la bobine (12) dans le sens du déroulement (17).

2. Installation de laisse selon la revendication 1,
**caractérisée par**
un levier de manoeuvre (34) pour bloquer le verrou (16) dans une position dans laquelle il n'est pas en prise avec la bobine (12).

3. Installation de laisse selon la revendication 1 ou 2,
**caractérisée en ce que**
le verrou (16) ne peut être mis en prise avec la bobine (12) que dans le sens du déroulement (17).

4. Installation de laisse selon l'une des revendications 1 à 3,
**caractérisée en ce que**
le verrou (16) est monté pivotant sur le boîtier (11) et lorsqu'il vient en prise avec la bobine (12), il s'appuie contre le boîtier dans le sens opposé au sens de rotation de la bobine.

5. Installation de laisse selon l'une des revendications 1 à 4,
**caractérisée en ce que**
le verrou est relié à un levier de commande (26) coopérant avec le disque de commande (23).

6. Installation de laisse selon l'une des revendications 1 à 5,
**caractérisée en ce que**
le levier de commande (26) retient le verrou (16) contre la force d'un ressort (28) pour le tenir hors de prise de la bobine (12).

7. Installation de laisse selon l'une des revendications 1 à 6,
**caractérisée en ce que**
la transmission (18) comporte un pignon (21) monté sur l'axe (29) de la bobine (12) et au moins un pignon intermédiaire (20) en prise avec le pignon et entraînant le disque de commande (23).

8. Installation de laisse selon l'une des revendications 1 à 7,
**caractérisée en ce que**
le disque de commande (23) est en forme de roue dentée à denture intérieure concentrique à l'axe (29) de la bobine et en prise avec au moins un pignon intermédiaire (20).

9. Installation de laisse selon l'une des revendications 1 à 8,
**caractérisée en ce que**
la transmission (18) est encapsulée dans le boîtier (11).

10. Installation de laisse selon l'une des revendications 1 à 9,
**caractérisée en ce que**
la démultiplication de la transmission (18) est choisie pour que le verrou (16) ne puisse être mis en prise avec la bobine (12) que pour une position de rotation du disque de commande (23).

11. Installation de laisse selon l'une des revendications 1 à 10,
**caractérisée en ce que**
le disque de commande (23) présente sur sa surface périphérique à l'opposé de son axe de rotation (29), une came de commande ou une cavité de commande (25) coopérant avec le levier de commande (26).

12. Installation de laisse selon l'une des revendications 1 à 11,
**caractérisée en ce que**
la bobine comporte de brides latérales (14) entre lesquelles passe la laisse, et
au moins une bride comporte au moins une partie en saillie de blocage (15) ou une cavité de blocage dans laquelle vient le verrou (16) en position de libération.
